(19) Europäisches Patentamt
European Patent Office
Office européen des brevets

(11) **EP 4 470 985 A1**

(12) **EUROPEAN PATENT APPLICATION**

(43) Date of publication:
    **04.12.2024  Bulletin 2024/49**

(21) Application number: **23178799.5**

(22) Date of filing: **12.06.2023**

(51) International Patent Classification (IPC):
    ***C04B 28/00*** (2006.01)    ***C04B 18/24*** (2006.01)

(52) Cooperative Patent Classification (CPC):
    (C-Sets available)
    **C04B 28/006**                            (Cont.)

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **KH MA MD TN**

(30) Priority:  **02.06.2023  PT 2023118691**

(71) Applicant: **Instituto Politécnico De Leiria
    2411-901 Leiria (PT)**

(72) Inventors:
    • **SILVA, ALANA DA
       MARINHA GRANDE (PT)**
    • **BEM D'EÇA PEIXINHO, ANA DO
       MARINHA GRANDE (PT)**
    • **MENDES GASPAR, FLORINDO JOSÉ
       MARINHA GRANDE (PT)**
    • **SIQUEIRA DE ALMEIDA ARCHER DE
       CARVALHO, TOMÁS
       MARIA
       MARINHA GRANDE (PT)**

(74) Representative: **Pereira da Cruz, Joao
    J. Pereira da Cruz, S.A.
    Rua Victor Cordon, 10-A
    1249-103 Lisboa (PT)**

(54) **COMPOSITIONS AND COMPOSITE MATERIALS COMPRISING GEOPOLYMER AND AGRO-INDUSTRIAL WASTE AND USE THEREOF**

(57)    The present disclosure is directed to compositions comprising a geopolymer and a waste material at a weight per weight (w/w) ratio from 20:1 to 4:1, respectively, wherein the geopolymer comprises fly ash, preferably from biomass, metakaolin, an alkali metal silicate, and an alkali metal hydroxide, and the waste material comprises agricultural waste, plant waste, vegetable waste, or a combination thereof, and composite material comprising thereof. Further, use of compositions and composite materials in construction sector, automotive industry, packaging industry, ceramics, or any combination thereof, preferably in coatings, are also provided.

**EP 4 470 985 A1**

(52) Cooperative Patent Classification (CPC): (Cont.)

C-Sets
**C04B 28/006, C04B 12/04, C04B 14/106,
C04B 18/08, C04B 18/248, C04B 18/26,
C04B 22/062, C04B 40/0263**

**Description**

FIELD OF THE INVENTION

The present disclosure relates generally to geopolymer and agro-industrial waste compositions and use thereof, e.g construction sector, patircularly in coatings.

BACKGROUND OF THE INVENTION

In the current global scenario and in the face of climate and energy conditions, the construction sector, which is responsible for a large part of the consumption of natural resources, energy and water, and for generating a large amount of greenhouse gases, has been increasingly pressured to develop alternative materials and more efficient and sustainable building systems.

Energy consumption for industrialized manufacture of building materials is very high, so the use of materials that require less energy in their production process is an alternative to reduce the impact that the high energy demand of this sector causes on the environment. Therefore, traditional building materials may be replaced by materials wholly or partially from renewable sources.

The use of raw materials obtained from plant residues makes it possible to adopt a circular model in which residues are transformed into new resources, resulting in the economic valuation of organic residues generated from waste from agricultural and forestry industries. Therefore, there is a need to for the development of new construction materials based on natural raw materials, as well as to search for more ecological binder materials with properties equal to or superior to conventional materials, in order to seek to further reduce the impact.

Patent DE4320506A1 discloses a shaped body made of light insulating materials, in particular a layer of silica and opacifier and possibly mineral wool, which is provided with an additional coating, characterized in that the coating from a mixture of light fillers and an inorganic hardener with a Geopolymer exists, which is connected to the layer made of pyrogenic silica. The geopolymer consists of an amorphous, powdery oxide mixture with contents of amorphous silicon oxide and aluminum oxide and/or a pure amorphous silicon oxide and /or rice husk ash and that as light fillers Perlite and/or vermiculite and/or fumed silica are used.

Patent FR2997944A1 discloses insulating construction materials with low thermal conductivity comprising additions of plant origin, as well as a method of preparation and uses of such a material. It describes materials comprising: a hydraulic binder (Portland cement, Ciment Fondu®, sulphoaluminous cement, calcium aluminate cement, hydraulic lime, aerated lime); in particular Portland cement, Ciment Fondu®; and a vegetable addition (selected from the aggregates of hemp (hemp), corn cob, sorghum, flax shives, miscanthus (elephant grass), bales of rice husks, cane bagasse, cereal straw, sunflower straw, corn straw, kenaf, coconut, olive kernels, bamboo, wood pellets, wood chips and mixtures thereof).

Patent CN106927735A discloses a fly-ash-base geopolymer rice hull thermal-insulation mortar, including mass ratio is 5:1 to 2 powder mixture and water. The powder mixture includes powdered rice hulls fly ash, silicon ash, sodium silicate solid, technical pure NaOH and sodium tripolyphosphate.

SUMMARY OF THE INVENTION

In one aspect of the disclosure, there is provided a composition comprising a geopolymer and a waste material at a weight per weight (w/w) ratio from 20:1 to 4:1, respectively, wherein the geopolymer comprises fly ash, preferably from biomass, metakaolin, an alkali metal silicate, and an alkali metal hydroxide, and the waste material comprises agricultural waste, plant waste, vegetable waste, or a combination thereof.

In some embodiments, the geopolymer comprises from 30% to 60% weight per weight (w/w) of fly ash, from 2% to 20% (w/w) of metakaolin, 2% to 10% (w/w) of an alkali metal silicate, and from 10% to 30% (w/w) of an alkali metal hydroxide.

In some embodiments, the geopolymer comprises from 10% to 30% (w/w) of water.

In some embodiments, the composition comprises from 5% to 20% (w/w) of the waste material and from 80% to 95% (w/w) of the geopolymer.

In some embodiments, the waste material comprises rice husk, giant reed fiber, sugarcane, pine, pine needle, straw, moss, flax, coconut fiber, residues from wood processing, or any combination thereof.

In some embodiments, the alkali metal silicate comprises an alkali metal selected from the group consisting of Na, K, Li, and any combination thereof, preferably Na, and the alkali metal hydroxide is selected from the group consisting of NaOH, KOH, LiOH, and any combination thereof, preferably NaOH.

In another aspect of the disclosure, there is provided a composite material comprising the composition according to the present disclosure, wherein the geopolymer is a dehydrated geopolymer.

In some embodiments, the composite material has a thermal conductivity from 0.09 W/mK to 0.3 W/mK.

In some embodiments, the composite material has a physical density from 0.5 g/cm$^3$ to 1 g/cm$^3$.

In some embodiments, the composite material has an elastic modulus from 6 MPa to 70 MPa.

In some embodiments, the composite material has a flexural strength from 0.05 MPa to 3 MPa.

In another aspect of the disclosure, there is provided a plate comprising the composite material according to the present disclosure, wherein the plate has a length from 305 mm to 295 mm, a width from 305 mm to 295 mm and a thickness from 35 mm to 25.

In another aspect of the disclosure, there is provided a method for obtaining a composition according to the present disclosure, the method comprising contacting from 80% (w/w) to 95% (w/w) of a geopolymer with from 5% to 20% (w/w) of a waste material, thereby obtaining the composition according to the present disclosure.

In some embodiments, the method further comprises adding the composition to a mold, at a temperature from 20 °C to 70 °C, for a period of time from 12 hours (h) to 72 h.

In another aspect of the disclosure, there is provided a use of the composition according to the present disclosure, in construction sector, automotive industry, packaging industry, ceramics, or any combination thereof, preferably in coatings, more preferably insulating coatings, for basements, overlay roofs, sarking roofs, facades, cavity walls, packages, recipients, or cars.

In another aspect of the disclosure, there is provided a use of the composite according to the present disclosure, in construction sector, automotive industry, packaging industry, ceramics, or any combination thereof, preferably in coatings, more preferably insulating coatings, for basements, overlay roofs, sarking roofs, facades, cavity walls, packages, recipients, or cars.

In another aspect of the disclosure, there is provided a use of the plate according to the present disclosure, in construction sector, automotive industry, packaging industry, ceramics, or any combination thereof, preferably in coatings, more preferably insulating coatings, for basements, overlay roofs, sarking roofs, facades, cavity walls, packages, recipients, or cars.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

Further embodiments and the full scope of applicability of the present disclosure will become apparent from the detailed description given hereinafter. However, it should be understood that the detailed description and specific examples, while indicating preferred embodiments of the disclosure, are given by way of illustration only, since various changes and modifications within the spirit and scope of the invention will become apparent to those skilled in the art from this detailed description.

BRIEF DESCRIPTION OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

Figure 1 is a graph of thermal conductivity and density of plates comprising rice husk and geopolymer;
Figure 2 is a graph of the influence of the geopolymer on flexural strength; and
Figure 3 is a graph of the elastic modulus of compositions comprising geopolymer.

DETAILED DESCRIPTION OF THE INVENTION

According to some embodiments, the present disclosure provides a composition and a composite material comprising a geopolymer and a waste material.

According to the present disclosure, a composition and a composite material as described herein comprises vegetable fibers from a waste material and a geopolymer as a binder. In some embodiments, a composite material as described herein has improved thermal properties due to the incorporation of the waste material, such as vegetable fibers.

According to the present disclosure, a composite material as described herein is characterized by at least one improved property (e.g. mechanical property and/or physical property) as compared to the property for a equivalent composite material free of the at least one waste material. In some embodiments, the at least one property is enhanced by at least 5%, at least 10%, or at least 20%. Each possibility represents a seperate embodiment of the present disclosure.

The present disclosure is based, in part, on the finding that compositions as described herein have the desired properties (such as consistency) to obtain composite materials that can be used as a replacement of conventional construction materials (such as plates comprising a composite material as described herein). Moreover, composite materials as described herein, comprise readily available waste materials (such as fibers and/or local resiues) which reduces the final cost of the material.

According to the present disclosure, "waste material" refers to a agricultural waste, plant waste, vegetable waste, or a combination thereof. In some embodiments, waste material refers to a vegetable fiber from agricultural waste, plant waste, vegetable waste, or a combination thereof. The present disclosure is based, in part, on the finding that a waste material as described herein is used in the composition as is, without the need of any pre-treatment, such as processing, grinding process or crushing process. A waste material as described herein is used untreated. A waste material according to the present disclosure is used as an aggregate in the composition. Non-limiting examples of waste materials according to the present disclosure include rice husk, giant reed fiber, sugarcane, pine, pine needle, straw, moss, flax, coconut fiber, and residues from wood processing. The technical effect associated, is the fact that according to the present disclosure, a waste material is re-used directly, without the need of a pre-treatments, leading to a decrease in energy consumption and without gas emissions. The present disclosure is based, in part, on the finding that the use of waste materials without pre-treatment as described herein, lead to stable compositions and composite materials, with appropriate properties as described herein, able to be use e.g., as coatings and replace common construction materials.

According to the present disclosure, a geopolymer is used in the composition as a binder material, replacing the commonly used cement. The present disclosure is based, in part, on the finding that a geopolymer as described herein is a sustainable alternative to cement, as it allows the incorporation of an agro-industrial waste and leads to the reduction of $CO_2$ emissions.

According to the present disclosure, "geopolymer" refers to a type of inorganic polymer that is formed by the chemical reaction between a source material rich in silica ($SiO_2$) and alumina ($Al_2O_3$) with an alkaline activator. Geopolymer refers to a class of materials that are typically used as a cementitious binder or alternative to conventional Portland cement. Geopolymers are characterized by their three-dimensional network structure, which is formed through the polymerization of the source material and the alkaline activator. The alkaline activator, usually an alkali metal hydroxide or silicate, initiates the reaction by dissolving the silica and alumina, leading to the formation of a stable and hardened structure. The raw materials used in geopolymerization can vary and may include industrial waste materials such as fly ash, slag, or metakaolin, as well as natural minerals like volcanic ash. These materials provide the necessary source of silicon and aluminum to form the geopolymeric network.

According to some embodiments, the present disclosure provides a composition comprising a geopolymer and a waste material at a weight per weight (w/w) ratio from 20:1 to 4:1, respectively, wherein the geopolymer comprises fly ash, metakaolin, an alkali metal silicate, and an alkali metal hydroxide, and the waste material comprises agricultural waste, plant waste, vegetable waste, or a combination thereof. According to the present disclosure, a composition as described herein is a fluid composition. In some embodiments, a composition as described herein has a paste composition.

In some embodiments, the fly ash according to the present disclosure is fly ash from biomass. The present disclosure is based in part, on the fact that the use of fly ash from biomass increases the use of residues in the composition together with the waste material. The tecnical effect associated is the reduction of the amount of new and raw materials, which leads to a energy save and reduction of gas emissions. Moreover, the use of residues such as fly ash from biomass and a waste material as described herein, increases mechanical resistance (flexural strength) of a composite material, comprising a composition as described herein.

In some embodiments, the composition comprises from 5% to 20% (w/w), from 6% to 20% (w/w), from 8% to 20% (w/w), from 10% to 20% (w/w), from 5% to 15% (w/w), from 6% to 15% (w/w), or from 8% to 15% (w/w) of the waste material, including any range therebetween. Each possibility represents a seperate embodiment of the present disclosure. In some embodiments, the composition comprises from 80% to 95% (w/w), from 82% to 95% (w/w), from 85% to 95% (w/w), from 86% to 95% (w/w), 80% to 92% (w/w), from 82% to 92% (w/w), from 85% to 92% (w/w), or from 86% to 92% (w/w) of the geopolymer, including any range therebetween. Each possibility represents a seperate embodiment of the present disclosure.

In some embodiments, the weight per weight (w/w) ratio of geopolymer and waste material from 20:1 to 4: as described hereinabove, is important and essential to achieve the right consistency and integrity of the composition so it can be aplied in a mold to obtain the respective composite material. The present disclosure is based in part, on the finding that, excessive reduction of the amount of geopolymer leads to the loss of integrity of the mixture.

A (w/w) ratio as disclosed herein and an amount from 5% to 20% (w/w) of the waste material and from 80% to 95% (w/w) of the geopolymer as disclosed herein, is essential for achieving a good adhesion between the waste material and the geopolymer.

In some embodiments, the geopolymer comprises from 20% to 60% weight per weight (w/w) of fly ash, preferably from 30% to 60% (w/w), more preferably from 35% to 55% (w/w). In some embodiments, the geopolymer comprises from 2% to 40% (w/w), from 2% to 20% (w/w), from 2% to 10% (w/w), or from 2% to 6% (w/w), of metakaolin, preferably from 2% to 6% (w/w), including any range therebetween. Each possibility represents a seperate embodiment of the present disclosure. In some embodiments, the geopolymer comprises from 2% to 10% (w/w) of an alkali metal silicate, preferably from 2% to 7% (w/w) and from 10% to 30% (w/w) of an alkali metal hydroxide, preferably from 15% to 15% (w/w).

In some embodiments, the alkali metal silicate comprises an alkali metal selected from the group consisting of Na, K, Li, and any combination thereof. In some embodiments, the alkali metal silicate comprises Na. In some embodiments, the alkali metal hydroxide is selected from the group consisting of NaOH, KOH, LiOH, and any combination thereof. In some embodiments, the alkali metal hydroxide is NaOH.

In some embodiments, the geopolymer comprises from 10% to 30% (w/w) of water. In some embodiments, the geopolymer comprises from 10% to 25% (w/w), from 10% to 21% (w/w), from 15% to 25% (w/w), or from 15% to 21% (w/w) of water, including any range therebetween, preferably from 15% to 21% (w/w). Each possibility represents a seperate embodiment of the present disclosure. The present disclosure is based in part, on the finding that, a (w/w) ratio of water as disclosed herein is essential for achieving a required consistency of the composition.

According to some embodiments, the present disclosure provides a composite material comprising a composition as described hereinabove. In some embodiments, the present disclosure provides a composite material comprising a composition, the composition comprising a geopolymer and a waste material at a weight per weight (w/w) ratio from 20:1 to 4:1, respectively, wherein the geopolymer comprises fly ash, metakaolin, an alkali metal silicate, and an alkali metal hydroxide, and the waste material comprises agricultural waste, plant waste, vegetable waste, or a combination thereof. In some embodiments, the geopolymer is a dehydrated geopolymer (dry geopolymer). In some embodiments, the fly ash according to the present disclosure is fly ash from biomass. A composite material as described herein, is a solid composite material.

In some embodiments, the composite has a thermal conductivity from 0.09 W/mK to 0.3 W/mK.

The present disclosure is based, in part, on the finding that a composite material as described herien has a relatively low thermal conductivity when compared to other conventional construction materials, such as wood and ceramic bricks. A composite material as described herein with low conductivity helps to improve thermal insulation.

The present disclosure is based, in part, on the finding that a composite material as described herein comprising a waste material has a lower thermal conductivity when compared to a similar control composite material devoid of waste material.

In some embodiments, the composite has a physical density from 0.5 g/cm$^3$ to 1 g/cm$^3$. The present disclosure is based, in part, on the finding that a composite material as described herein with a pgysucal density from 0.5 g/cm$^3$ to 1 g/cm$^3$, is considered a light material, when compared to other materials suh as a ceramic brick or concrete.

In some embodiments, the composite has an elastic modulus from 6 MPa to 70 MPa. An elastic modulus as described herein, provides some malleability to the composite material, which means the material can be molded easily into a desired shape.

In some embodiments, the composite has a flexural strength from 0.05 MPa to 3 MPa.

According to some embodiments, the present disclosure provides a plate comprising the composite material as described herein.

According to some embodiments, the present disclosure provides a plate comprising the composite material according to the present disclosure, wherein the plate has a length from 305 mm to 295 mm, a width from 305 mm to 295 mm and a thickness from 35 mm to 25. The tecnical effect associated is the fact that a composite material and a plate as described herein, comprise dehydrated geopolymer (dry geopolymer) and are solid. According to the present disclosure, "dehydrated geopolymer" refers to the geopolymer composition devoid of water.

According to some embodiments, the present disclosure provides a method for obtaining a composition according to the present disclosure, the method comprising contacting from 80% (w/w) to 95% (w/w) of a geopolymer with from 5% to 20% (w/w) of a waste material, thereby obtaining the composition according to the present disclosure.

In some embodiments, the method further comprises adding the composition to a mold, at a temperature from 20 °C to 70 °C, for a period of time from 6 hours (h) to 72 h, thereby obtaining a composite material according to the present disclosure.

The present disclosure is based in part, on the finding that, low temperature outside of a range as disclosed herein increase the time needed for the composite material to dry. Higer temperatures outside of a range as disclosed herein leads to deformations in the shape of the composite material.

The present disclosure is based in part, on the finding that, the time period as desclosed herein is essencial for the composite material reaching a stable weight.

In some embodiments, the method further comprises removing the composite material from the mold. In some embodiments, the composite material is a plate as described herein.

According to some embodiments, the present disclosure provides a plate comprising the composite material according to the present disclosure, wherein the plate has a length from 305 mm to 295 mm, a width from 305 mm to 295 mm and a thickness from 35 mm to 25.

According to some embodiments, the present disclosure provides a use of a plate as described hereinabove, in construction sector, automotive industry, packaging industry, ceramics, or any combination thereof. In some embodiments, the present disclosure provides a use of a composite material as described hereinabove, in coatings. In some embodiments, the coatings are insulating coatings, for basements, overlay roofs, sarking roofs, facades, cavity walls, packages, recipients, or cars.

According to some embodiments, the present disclosure provides a use of a composition as described hereinabove, in construction sector, automotive industry, packaging industry, ceramics, or any combination thereof. In some embodiments, the present disclosure provides a use of a composite material as described hereinabove, in coatings. In some embodiments, the coatings are insulating coatings, for basements, overlay roofs, sarking roofs, facades, cavity walls, packages, recipients, or cars.

According to some embodiments, the present disclosure provides a use of a composite material as described hereinabove, in construction sector, automotive industry, packaging industry, ceramics, or any combination thereof. In some embodiments, the present disclosure provides a use of a composite material as described hereinabove, in coatings. In some embodiments, the coatings are insulating coatings, for basements, overlay roofs, sarking roofs, facades, cavity walls, packages, recipients, or cars.

As used herein the term "about" refers to $\pm$ 10 %.

The terms "comprises", "comprising", "includes", "including", "having" and their conjugates mean "including but not limited to".

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure.

Various embodiments and aspects of the present disclosure as delineated hereinabove and as claimed in the claims section below find experimental support in the following examples.

### EXAMPLES

Reference is now made to the following examples, which together with the above descriptions illustrate some embodiments of the disclosure in a non-limiting fashion.

### *Materials and methods*

### *Characterization of materials*

### *Rice husk*

Rice husk used in this work was of the species Oryza sativa, subspecies Japónica, which was obtained from a rice cultivation company located in the Beira Litoral region of Portugal, namely in the municipality of Figueira da Foz. The material used did not undergo any type of processing or special treatment, it was just stored in bags protected from light, heat and humidity. In Table 1, a general composition of rice husk can be seen.

Table 1 - Composition of rice husks

| Component | (%) |
|---|---|
| Cellulose | 50-60 |
| lignin | 25-30 |
| Silica | 15-20 |

Its density varies between 0.118 and 0.150 g/cm$^3$, depending on several factors, such as moisture content, particle size, porosity and compaction.

*Geopolymer*

The material used as a binder in the composite boards in the present study was a geopolymer, which consists of a material that has been considered as a potential substitute for the traditional Portland cement. The geopolymer is a material obtained by the reaction between silica and alumina, present in the precursor materials, which in an embodiment are natural minerals, fly ash, blast furnace slag, red mud, etc., in an alkaline environment provided by the mixture with the activating materials, which consist of liquid solutions usually composed of sodium or potassium. Availability and cost are determining factors that shall be considered when choosing materials for the production of a given geopolymer composition.

The precursor materials of the formulation used in the present work, consist of biomass fly ash, which was obtained from waste from a thermoelectric plant, and metakaolin. The liquid alkaline activators were sodium hydroxide and sodium silicate. In addition, distilled water is used, which is called activation water, which is necessary for the polymerization reaction to occur to produce the solid matrix of the geopolymer. For the production of the geopolymeric formulation applied in this work, the materials were used in the proportions shown in Table 2.

Table 2 - Composition of the geopolymer

| Material | | (%) |
|---|---|---|
| precursors | Biomass fly ash | 49.0 |
| | Metakaolin | 4.0 |
| activators | sodium silicate | 5.5 |
| | sodium hydroxide | 21.1 |
| | Distilled water | 20.4 |

For this work, the preparation of the geopolymeric paste consists of mixing the materials manually. Initially, the precursor materials, fly ash and metakaolin are mixed, and then the activating liquids, sodium hydroxide, sodium silicate and water are added.

*Composition and preparation of plates*

Different board compositions were produced using the materials mentioned above, with rice husk (RH) being the aggregate, and geopolymer (GP) being the binding material. It is important to highlight that not all compositions were selected to be tested. First, a prior visual analysis of the integrity and geometry of the plates was carried out, and those that did not present conditions to be submitted to the tests were discarded. A dimensional analysis was also carried out, mainly to verify the thickness of the plates.

Compositions No. 1-7 presented in Table 3 were selected to have their properties analyzed.

Table 3 - Compositions selected for tests

| No | Material * | | Observations |
| --- | --- | --- | --- |
| | RH (g) | GP (g) | |
| 1 | 300 | 4000 | good structural integrity; surfaces without irregularities; and adequate geometry |
| 2 | 350 | 3000 | |
| 3 | 350 | 4000 | |
| 4 | 400 | 2500 | |
| 5 | 400 | 3000 | |
| 6 | 450 | 2500 | |
| 7 | 450 | 3000 | |
| 8 | 400 | 1000 | without structural integrity and without and adequate geometry, possibly due to the small amount of geopolymer |
| 9 | 350 | 1500 | |
| 10 | 350 | 2000 | |
| 11 | 300 | 2500 | good structural integrity but fragile |
| 12 | 400 | 2000 | |
| 13 | 500 | 2500 | |
| 14 | 300 | 3000 | good structural integrity but surfaces with irregularities, possibly due to small volume of the material in the mold |
| * -RH: rice husk; GP: geopolymer | | | |

All plates were prepared using the same aluminum mold that had approximately the same dimensions, which were 300 x 300 x 30 mm (with small variations in the order of 3 mm). The mold is composed of a base, with removable lid and sides.

The mixing of the materials of each composition was carried out manually, until the binding material involved the aggregates homogeneously. After performing the mixture, it was placed in the mold, the lid was fixed and the mold remained closed for a period of at least 6 hours.

The sides of the mold were removed and the material was placed in an oven for drying at a temperature of 50 °C, until reaching constant mass. In the case of this work, it was decided not to completely remove the plate from the mold, keeping the lid fixed during the first 24 hours, in order to guarantee a completely flat surface for the plates, as without the cover, the material tends to suffer some deformations on the surface due to the heat in the oven, which can impair the accuracy of the tests, especially the thermal conductivity test. After the plate is completely dry, it is removed from the oven and stored in a dry and protected place to be later submitted to the tests.

*Thermal conductivity*

To determine the thermal conductivity ($\lambda$) of the different compositions of plates, after they pass through the drying process at 50 °C, they were submitted to the test using the LM.PLUS 305 heat flow meter equipment according to the ISO 8301 (1991) standard. The assay was repeated three times for each plate, in order to obtain an average value for each composition. The equipment contains a cooling plate at the bottom and a heating plate at the top. The temperature of the cooling plate set for this test was 10°C and the heating plate was 40°C. With the defined temperatures, the equipment works for an average of 120 minutes until a stable value of the thermal conductivity coefficient is obtained.

*Flexural strength*

In order to verify the mechanical resistance (flexural strength), the bending resistance test was carried out on three samples in the form of beams for each selected composition, based on the EN 12089 standard - Thermal insulation products for applications in buildings - Determination of bending behavior, to determine the material's resistance to bending stresses during application and transport.

In the flexural strength test, a part is subjected to a transverse load until rupture or permanent deformation of the structure occurs. The load is applied to the top part of the part, while the bottom part is supported at two points. During the test, the deflection of the part is measured, that is, the curvature it undergoes under load. From these data, it is possible to determine the flexural strength of the material.

To carry out this test, the plates were cut using a circular saw into samples with dimensions of 300 x 50 x 30 mm.

The equipment used to carry out the bending test was the Universal Testing Machine - Instron 4505. The bending test was carried out at three points, placing the sample on two cylindrical supports with 80 mm in diameter each, the distance between the axes of the supports was 200 mm, and a cylinder of 80 mm in diameter centered on the upper part of the sample, in which the load is directly applied. The load was applied at a speed of 10 mm/min.

Flexural strength was calculated from the equation:

$$\sigma_f = \frac{3 \times F_m \times L}{2 \times b \times d^2} \qquad (1)$$

where: $\sigma_f$ - Flexural strength (MPa) Fm - Maximum load (N); L - Distance between supports (mm); b - Width of the sample (mm); d - Thickness of the sample (mm).

In addition to calculating the flexural strength, the elastic modulus (E), or Young's modulus, was also calculated for each sample.

The elastic modulus was calculated from the graph obtained through flexion testing of each sample, which shows the load applied on the x-axis and the displacement on the y-axis. When viewing the graph, its linear region shall be determined, which is located before failure, where the deformation is directly proportional to the applied load.

With the region of the graph determined, the following equation applies:

$$E = \frac{(F_2 - F_1) \times L^2}{(d_2 - d_1) \times 48 \times \left(\frac{b \times h^3}{12}\right)} \quad (2)$$

where: E - Elastic Modulus (MPa); $F_2$ - Maximum strength of the region (N); $F_1$ - Minimum strength of the region (N); L - Length of the sample (mm); $d_2$ - Maximum displacement of the region (mm); $d_1$ - Minimum displacement of the region (mm) b - Width of the sample (mm); d - Thickness of the sample (mm).

The result will be a measure of the stiffness of the material, expressed in MPa. It is important to emphasize that the elastic modulus can vary with the test conditions and the specific properties of the material, such as its density, temperature, humidity and other factors.

***Water absorption***

The water absorption of the materials was determined using a climatic chamber, model Sunrise SU340ES 2010, which allows controlling the temperature and humidity. For this test, the plates, after being dried in an oven at a constant temperature of 50°C, were cut into samples measuring 150 x 50 x 30 mm, using a circular saw. In Table 4, the compositions submitted to this test can be observed.

Table 4 - Compositions submitted to the water absorption test

| No. | Material* | |
|---|---|---|
| | RH (g) | GP (g) |
| 1 | 300 | 4000 |
| 3 | 350 | 4000 |
| * - RH: rice husk; GP: geopolymer | | |

After cutting the samples, they were weighed and placed in the climatic chamber, simulating an ambient temperature with a temperature of 20°C and relative humidity of 60%, until reaching a constant mass value. This first cycle of the test ran for 14 days, until the samples reached a constant mass and only served to ensure that all samples were under the same temperature and humidity conditions, since before being inserted into the chamber they were stored in a place without control. of these conditions. After having stabilized the mass of the samples, the relative humidity was increased to 95% and the temperature was maintained at 20°C. The samples were kept under these conditions inside the chamber, being periodically weighed until they again presented a constant mass for this humidity value. This cycle with 95% relative humidity lasted 35 days.

After exposure to high humidity in the climate chamber, water absorption is calculated according to the following equation:

$$W_m = \frac{m_2 - m_1}{m_2} \times 100 \quad (3)$$

where: $W_m$ - Water absorption content (%); $m_1$- Dry mass at room temperature (g); $m_2$- Wet mass after finishing the test (g).

EXAMPLE 1

COMPOSITIONS

After the preparation process, all the plates underwent a prior analysis taking into account their geometry, dimensions and integrity. This analysis was instrumental in ensuring that the results of the tests performed below were accurate and reliable.

An example of discarded is plate n° 8 (Table 3), composed of 400 g RH and 1000 g GP, which did not maintain its integrity and completely lost its geometric shape when removed from the mold. There were compositions, such as plate n° 12 (Table 3) composed of 400 g RH and 2000 g GP, which, despite maintaining the geometric shape when removed from the mold broke showing that the material was not strong enough. It is also important to observe if the plates have a completely flat surface, as irregularities can affect the accuracy of the test results, especially the thermal conductivity test.

EXAMPLE 2

THERMAL CONDUCTIVITY

The plates that met the conditions to proceed with the tests, were submitted to a thermal conductivity test. Table 5 present the results of the compositions tested.

Table 5 - Density and thermal conductivity of rice husk and geopolymer plates

| Composition No. | RH (g) | GP (g) | Density (g/cm³) | Thermal conductivity (W/mK) |
|---|---|---|---|---|
| 1 | 300 | 4000 | 0.771 | 0.254 |
| 2 | 350 | 3000 | 0.871 | 0.185 |
| 3 | 350 | 4000 | 0.889 | 0.191 |
| 4 | 400 | 2500 | 0.751 | 0.132 |
| 5 | 400 | 3000 | 0.865 | 0.136 |
| 6 | 450 | 2500 | 0.863 | 0.123 |
| 7 | 450 | 3000 | 0.888 | 0.132 |

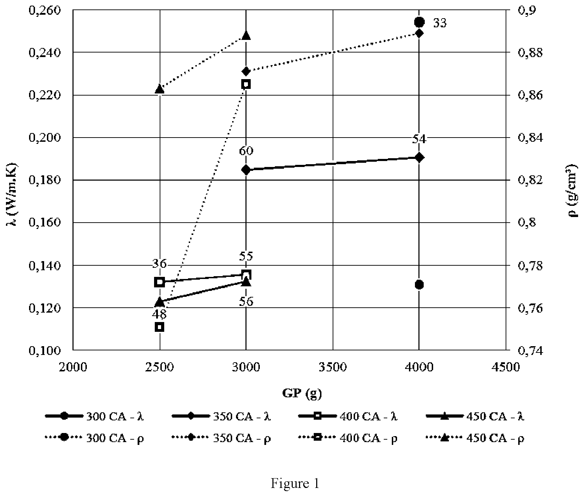

Figure 1 is a graph where one can visualize the results obtained for the thermal conductivity ($\lambda$) and the density ($\rho$) of the geopolymer plates and rice husk.

Results were obtained for the thermal conductivity of all the plates with geopolymer and RH, with values between 0.125 and 0.254 W/mK. Although not considered a high-performance thermal insulator, the material has relatively low thermal conductivity values when compared to other conventional construction materials, such as wood and ceramic bricks, for example.

Plates comprising only geopolymer presented a thermal conductivity from 0.244 to 0.336 W/mk.

EXAMPLE 3

FLEXURAL STRENGTH

Table 6 shows the average flexural strength results ($\sigma_f$) obtained through the mechanical test on the samples of each composition, as well as the respective calculated elastic modulus (E).

Table 6 - Flexural strength and elastic modulus results

| No. | RH (g) | GP (g) | Mean Fmax (N) | $\sigma_f$ average (MPa) | E average (MPa) |
|---|---|---|---|---|---|
| 1 | 300 | 4000 | 15.25 | 0.09 | 16.88 |
| 3 | 350 | 4000 | 28.33 | 0.17 | 53.28 |
| 5 | 400 | 3000 | 11.75 | 0.07 | 22.10 |
| 7 | 450 | 3000 | 9.00 | 0.06 | 8.64 |
| 2 | 350 | 3000 | 25.75 | 0.17 | 29.02 |

The plates of compositions n° 4 and n° 6 (Table 3), composed of 2500 g of geopolymer with 400 g and 450 g of rice husk, respectively, broke during the cutting process to prepare the samples for the test. Therefore, it was not possible to obtain the value of the mechanical resistance to flexion.

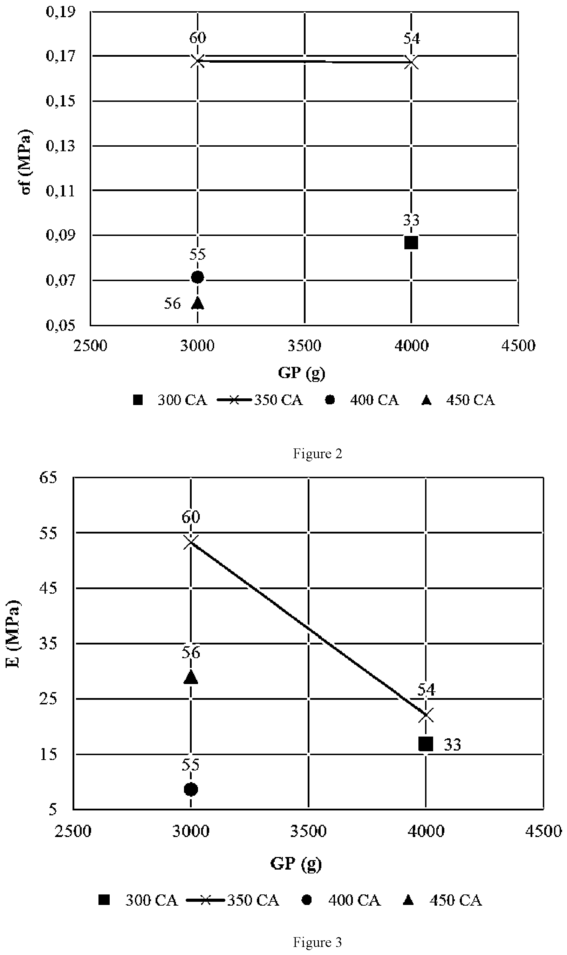

In the graph of Figure 2, the average mechanical resistance of the samples of each geopolymer composition can be seen. It is observed that the compositions that reached the lowest values, of 0.06 MPa and 0.07 MPa, were n° 7(450 RH+ 3000 GP) and n° 5 (400 RH+ 3000 GP), respectively. These two compositions are the ones with the highest amount of rice husk in their mixture and the lowest amount of geopolymer, that is, with a lower geopolymer/rice husk ratio. Composition n° 1 (300 g RH+ 4000 g GP) reached a very close value, of 0.09 MPa, despite having 33% more geopolymer in its mixture and presenting the highest geopolymer/rice husk ratio among all mixtures.

While compositions n° 3 (350 g RH+ 4000 g GP) and n° 2 (350 g RH+ 3000 g GP) achieved a strength of 0.17 MPa, with the geopolymer/rice husk ratio intermediate between all compositions. Thus, it is considered that the optimal geopolymer/rice husk ratio is between the proportions of 8.57:1 and 11.43:1, in terms of mechanical strength.

As for the elastic modulus, the samples reached values between 8.64 and 53.28 MPa. In the graph of Figure 3, one can observe the elastic modulus of each geopolymer composition.

The elastic modulus values indicate that the materials are relatively rigid, and are within the expected range for composite materials with vegetable raw material.

EXAMPLE 4

WATER ABSORPTION

The first cycle of the water absorption test, with a temperature of 20°C and a relative humidity of 60%, only served to guarantee that all the samples were in the same conditions, therefore, for the purposes of obtaining the water absorption content, it was considered if as initial mass (m1) the mass recorded after 14 days under the above-mentioned conditions, when the mass of the samples reached a constant value. In the second cycle of the test, with a temperature of 20°C and relative humidity of 95%, the samples took 35 days to reach constant mass, these values being considered as the final mass (m2) of the samples.

After recording the masses of the samples, the water absorption content (*Wm*) was calculated using equation 3. Table 7 shows the masses registered for each sample, as well as its variation (Δm ) and the water absorption content (*Wm*).

Table 7 - Mass and water absorption content

| No. compositio n | No. sample | m1 (g) | m2 (g) | $\Delta$m (g) | $\Delta$m (%) | wm (%) | average wm (%) |
|---|---|---|---|---|---|---|---|
| 1 (300 RH+ 4000 GP) | 1.1 | 237.3 2 | 345.7 4 | 108.42 | 45.69 | 31.36 | |
| | 1.2 | 169.5 7 | 249.1 1 | 79.54 | 46.91 | 31.93 | 32.45 |
| | 1.3 | 141.9 1 | 215.2 5 | 73.34 | 51.68 | 34.07 | |
| 3 (350 RH + 4000 GP) | 3.1 | 228.87 | 340.42 | 111.55 | 48.74 | 32.77 | |
| | 3.2 | 164.1 5 | 247.8 7 | 83.72 | 51.00 | 33.78 | 33.42 |
| | 3.3 | 147.65 | 222.76 | 75.11 | 50.87 | 33.72 | |

The acceptable value of water absorption content for materials can vary depending on the type of material, design specifications and service conditions. In general, plant-based materials tend to have a relatively higher water absorption content compared to other insulation materials. This is because many of these materials are porous and have a fibrous structure that can hold water. However, the water absorption content can vary significantly depending on the nature of the material, its degree of compaction, its density, its thickness and other factors.

In addition to calculating the water absorption rate, this test made it possible to visually analyze the degradation and susceptibility to the appearance of fungi and molds in samples exposed to a relative humidity of 95%.

Two of the samples of composition n° 1, comprising 300 g of rice husk and 4000 g of geopolymer, broke after 20 days exposed to humidity. Although this material showed a low level of water absorption, the material did not react very well to the humid environment. The presence of excess water in the geopolymer can cause the formation of pores and reduce the adhesion between the particles of the material, causing cracks.

This behavior was not verified in the samples of composition n° 3, also composed of 4000 g of geopolymer, but with 350 g of rice husk. Most likely due to its higher density and greater amount of rice husks in the mixture, the second composition resisted better and maintained its integrity until the end of the test.

Samples comprising rice husks and geopolymer did not show any sign of biological attack visible to the naked eye during this test.

The present work aims to investigate the use of agricultural residues, namely rice husk, as raw material for thermal insulation boards, with the objective of evaluating the viability and effectiveness of the composites. It was possible to verify that the incorporation of agricultural residues in thermal insulation materials can be a promising alternative, with the potential to contribute significantly to the reduction of the environmental impacts caused by the construction.

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

**Claims**

1. Composition comprising a geopolymer and a waste material at a weight per weight (w/w) ratio from 20:1 to 4:1, respectively, wherein said geopolymer comprises fly ash, preferably from biomass, metakaolin, an alkali metal silicate, and an alkali metal hydroxide, and said waste material comprises agricultural waste, plant waste, vegetable waste, or a combination thereof.

2. Composition according to claim 1, wherein said geopolymer comprises from 30% to 60% weight per weight (w/w) of fly ash, from 2% to 20% (w/w) of metakaolin, 2% to 10% (w/w) of an alkali metal silicate, and from 10% to 30% (w/w) of an alkali metal hydroxide.

3. Composition according to any one of claims 1 to 2, wherein said geopolymer comprises from 10% to 30% (w/w) of water.

4. Composition according to any one of claims 1 to 3, comprising from 5% to 20% (w/w) of said waste material and from 80% to 95% (w/w) of said geopolymer.

5. Composition according to any one of claims 1 to 4, wherein said waste material comprises rice husk, giant reed fiber, sugarcane, pine, pine needle, straw, moss, flax, coconut fiber, residues from wood processing, or any combination thereof.

6. Composition according to any one of claims 1 to 5, wherein said alkali metal silicate comprises an alkali metal selected from the group consisting of Na, K, Li, and any combination thereof, preferably Na, and said alkali metal hydroxide is selected from the group consisting of NaOH, KOH, LiOH, and any combination thereof, preferably NaOH.

7. Composite material comprising the composition according to any one of claims 1 to 6, wherein the geopolymer is a dehydrated geopolymer.

8. Composite material according to claim 7, having a thermal conductivity from 0.09 W/mK to 0.3 W/mK, and optionally, a physical density from 0.5 g/cm$^3$ to 1 g/cm$^3$.

9. Composite material according to any one of claims 7 to 8, having an elastic modulus from 6 MPa to 70 MPa, and optionally, a flexural strength from 0.05 MPa to 3 MPa.

10. Plate comprising the composite material according to any one of claims 7 to 9, wherein said plate has a length from 305 mm to 295 mm, a width from 305 mm to 295 mm and a thickness from 35 mm to 25.

11. Method for obtaining a composition according to any one of claims 1 to 6, the method comprising contacting from 80% (w/w) to 95% (w/w) of a geopolymer with from 5% to 20% (w/w) of a waste material, thereby obtaining the composition according to any one of claims 1 to 6.

12. Method according to claim 11, further comprising adding said composition to a mold, at a temperature from 20 °C to 70 °C, for a period of time from 6 hours (h) to 72 h.

13. Use of the composition according to any one of claims 1 to 6, in construction sector, automotive industry, packaging industry, ceramics, or any combination thereof, preferably in coatings, more preferably insulating coatings, for basements, overlay roofs, sarking roofs, facades, cavity walls, packages, recipients, or cars.

14. Use of the composite material according to any one of claims 7 to 9, in construction sector, automotive industry, packaging industry, ceramics, or any combination thereof, preferably in coatings, more preferably insulating coatings, for basements, overlay roofs, sarking roofs, facades, cavity walls, packages, recipients, or cars.

15. Use of the plate according to claim 10, in construction sector, automotive industry, packaging industry, ceramics, or any combination thereof, preferably in coatings, more preferably insulating coatings, for basements, overlay roofs, sarking roofs, facades, cavity walls, packages, recipients, or cars.

Figure 1

Figure 2

Figure 3

Europäisches
Patentamt

European
Patent Office

Office européen
des brevets

**EUROPEAN SEARCH REPORT**

Application Number

EP 23 17 8799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OLAYIWOLA H O ET AL: "Investigating the suitability of fly ash/metakaolin-based geopolymers reinforced with South African alien invasive wood and sugarcane bagasse residues for use in outdoor conditions", HOLZ ALS ROH- UND WERKSTOFF, SPRINGER-VERLAG. BERLIN, DE, vol. 79, no. 3, 3 January 2021 (2021-01-03), pages 611-627, XP037445493, ISSN: 0018-3768, DOI: 10.1007/S00107-020-01636-4 [retrieved on 2021-01-03] * Introduction; pages 611-614; table 1 * ----- | 1-15 | INV. C04B28/00 C04B18/24 |
| X | BHEEL NARAINDAS ET AL: "Synergic effect of metakaolin and groundnut shell ash on the behavior of fly ash-based self-compacting geopolymer concrete", CONSTRUCTION AND BUILDING MATERIALS, ELSEVIER, NETHERLANDS, vol. 311, 25 October 2021 (2021-10-25), XP086852318, ISSN: 0950-0618, DOI: 10.1016/J.CONBUILDMAT.2021.125327 [retrieved on 2021-10-25] * Introduction; table 3 * ----- -/-- | 1-4,6,7, 10-15 | |

TECHNICAL FIELDS
SEARCHED (IPC)

C04B

The present search report has been drawn up for all claims

| Place of search | Date of completion of the search | Examiner |
|---|---|---|
| The Hague | 5 December 2023 | Baldé, Kaisa |

EPO FORM 1503 03.82 (P04C01)

page 1 of 2

Europäisches
Patentamt

European
Patent Office

Office européen
des brevets

# EUROPEAN SEARCH REPORT

Application Number

EP 23 17 8799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATALKAH FARIS ET AL: "Use of non-wood biomass combustion ash in development of alkali-activated concrete", CONSTRUCTION AND BUILDING MATERIALS, ELSEVIER, NETHERLANDS, vol. 121, 17 June 2016 (2016-06-17), pages 491-500, XP029632441, ISSN: 0950-0618, DOI: 10.1016/J.CONBUILDMAT.2016.06.023 * page 499, right-hand column; tables 2,5,6 * * 3.1 Materials; page 493 * | 1,3-6, 11,13 | |
| A | REN BO ET AL: "Eco-friendly geopolymer prepared from solid wastes: A critical review", CHEMOSPHERE, PERGAMON PRESS, OXFORD, GB, vol. 267, 13 November 2020 (2020-11-13), XP086449792, ISSN: 0045-6535, DOI: 10.1016/J.CHEMOSPHERE.2020.128900 [retrieved on 2020-11-13] * figures 1,3 * | 1-15 | |
| | | | TECHNICAL FIELDS SEARCHED (IPC) |

The present search report has been drawn up for all claims

| Place of search | Date of completion of the search | Examiner |
|---|---|---|
| The Hague | 5 December 2023 | Baldé, Kaisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4320506 A1
- FR 2997944 A1

- CN 106927735 A